# EUROPEAN PATENT APPLICATION

(11) **EP 4 322 534 A1**
(43) Date of publication of application: **14.02.2024**
(21) Application number: 22190276.0
(22) Date of filing: 12.08.2022
(51) Int. Cl.: H04N 21/258, H04N 21/218

(54) **METHODS FOR VIEWING RECORDED EVENTS**

(71) Applicant: Khatib, Rami, Chesterfield Derbyshire S40 1TX (GB)
(72) Inventor: Khatib, Rami, Chesterfield Derbyshire S40 1TX (GB)
(74) Representative: Gillott-Jones, Nathan Philip

(57) **Abstract**

Embodiments described herein relate to a computer-implemented method, comprising: receiving (702) video data from each of a plurality of devices (100), wherein for each device (100) of the plurality of devices (100), the received video data corresponds to a video of a scene (110) recorded by the device (100) from a distinct location; receiving (706), from a first device of the plurality of devices (100), a request for video data corresponding to a video of the scene (110) recorded by another one of the plurality of devices (100); and sending (708) the requested video data to the first device.

## Description

### FIELD

The present disclosure relates to systems and methods for viewing recorded events on a device.

### BACKGROUND

Many people use devices with recording capability (e.g. mobile communications devices such as smartphones) to record scenes from live events, such as concerts and sporting events. For example, audience members may record the stage during a portion of a live performance at a concert, or members of a crowd at a football match may record a key event such as a penalty being taken.

These recordings are currently, however, predominantly retained for personal use. In spite of the number of live event recordings being made, current systems provide no mechanism to harness different recordings in order to enhance a user's live viewing experience.

Accordingly, there exists a need for improved systems and methods for viewing recorded events on a device, that make use of the numerous recordings that are made at such events.

### SUMMARY

This summary introduces concepts that are described in more detail in the detailed description. It should not be used to identify essential features of the claimed subject matter, nor to limit the scope of the claimed subject matter.

According to a first aspect of the present disclosure, there is provided a computer-implemented method, comprising: receiving video data from each of a plurality of devices, wherein for each device of the plurality of devices, the received video data corresponds to a video of a scene recorded by the device from a distinct location; receiving, from a first device of the plurality of devices, a request for video data corresponding to a video of the scene recorded by another one of the plurality of devices; and sending the requested video data to the first device.

The method of the first aspect allows a device that is recording video of a particular scene to view a video of the scene that is being recorded by another device. In this way, a user of the device can view video of the scene from a different location in real-time. This means that the user's viewing experience is enhanced, as they can view videos of the scene from different perspectives to the perspective associated with their physical location. Specifically, the videos recorded by other users at the same event are harnessed in order to enhance the user's viewing experience.

For each of the plurality of devices, the location of a device may comprise: the angular position of the device with respect to the scene; the distance of the device from the scene; and, optionally, the elevation of the device with respect to the scene.

The method may further comprise determining that the video data received from each of the plurality of devices corresponds to videos of the same scene. Therefore, when a user switches to viewing a video recorded by a different device, the video corresponds to the same scene that they are currently recording.

The method may further comprise receiving, from each of the plurality of devices, location information corresponding to the location of the device and orientation information corresponding to the orientation of the device. This allows the relative locations of devices that are recording video data to be determined more easily. The method may further comprise receiving, from each of the plurality of devices, altitude information corresponding to the altitude of the device.

The method may further comprise sending, to at least one of the plurality of devices, location data corresponding to the locations of the plurality of devices. This allows the devices to provide indicators that inform users of locations at which other videos of the scene are being recorded.

The method may further comprise: sending, to a further device, an orientation indication that indicates a location of the scene relative to a location of the further device; and in response to determining that the further device is recording video of the scene, grouping the further device with the plurality of devices. The further device may be a device that was not previously recording video of the scene. The orientation indicator assists the user in orientating the device so that a video of the scene is captured. Upon capturing video of the scene, the user is provided with the functionality to view videos of the scene that are being captured from other locations.

The method may further comprise: detecting that one of the plurality of devices has stopped recording a video of the scene; determining that another one of the plurality of devices was receiving video data corresponding to the video recorded by the device that has stopped recording; and sending video data received from a different one of the plurality of devices to the other device. This means that, if a particular user whose video is being viewed by another user stops recording video of the scene, any interruption to video being viewed by the other user is reduced or eliminated, because that user receives video data corresponding to a different video of the scene.

The method may further comprise: determining the received video data corresponding to a video with the highest audio quality; and sending, to the first device, audio data associated with the video with the highest audio quality. This allows users to view video of the scene from different locations, while receiving high quality audio of the scene.

The method may further comprise determining default video data for sending to a device, wherein the default video data is determined based on one or more of: the locations of each of the plurality of devices; the quality of the hardware of each of the plurality of devices; and the popularity of the videos recorded by each of the plurality of devices.

Sending the requested video data to the first device may comprise sending video data received from each of the other devices of the plurality of devices.

The method may further comprise: receiving, from one of the plurality of devices, a request for video data associated with a location that is different to the location associated with the video recorded by the one of the plurality of devices; determining that there is no video data associated with the different location to the location associated with the video recorded by the one of the plurality of devices; and sending, to the one of the plurality of devices, an indication that there is no video data associated with the different location to the location associated with the video recorded by the one of the plurality of devices.

According to a second aspect of the present disclosure, there is provided a computer-implemented method implemented at a device in communication with one or more servers, the method comprising: sending, to the one or more servers, first video data corresponding to a first video of a scene recorded by the device from a first location; sending, to the one or more servers, a request for video data corresponding to a second video of the scene recorded from a second location that is different to the first location; and receiving, from the one or more servers, the requested video data.

The method of the second aspect allows a device that is recording video of a particular scene to view a video of the scene that is being recorded by another device. In this way, a user of the device can view video of the scene from a different location in real-time. This means that the user's viewing experience is enhanced, as they can view videos of the scene from different perspectives to the perspective associated with their physical location. Specifically, the videos recorded by other users at the same event are harnessed in order to enhance the user's viewing experience.

The first location may comprise: a first angular position of the device with respect to the scene; a first distance of the device from the scene; and, optionally, a first elevation of the device with respect to the scene. The second location may comprise: a second angular position of a second device that is recording the second video, a second distance of the second device from the scene; and, optionally, a second elevation of the second device with respect to the scene, wherein one or more of the following are applicable: the second angular position is different to the first angular position; the second distance is different to the first distance; and the second elevation is different to the first elevation.

The method may further comprise sending, to the one or more servers, location information corresponding to the location of the device and orientation information corresponding to the orientation of the device. This allows the relative locations of devices that are recording video data to be determined more easily. The method may further comprise sending, to the one or more servers, altitude information corresponding to the altitude of the device.

The method may further comprise receiving, from the one or more servers, location data corresponding to the locations of a plurality of devices that are each recording video of the scene from a distinct location. This allows the devices to provide indicators that inform users of locations at which other videos of the scene are being recorded.

The method may further comprise: receiving, from the one or more servers, an orientation indication that indicates a location of the scene relative to a location of the device; and in response to the device being orientated so that it is recording video of the scene, receiving, from the one or more servers, a notification informing the device that it is grouped with a plurality of devices that are each recording video of the scene from a distinct location. The orientation indicator assists the user in orientating the device so that a video of the scene is captured.

Receiving the requested video data may comprise receiving video data corresponding to videos of the scene recorded by a plurality of devices.

The method may further comprise, further comprising: determining that the device has stopped recording video of the scene; and sending, to the one or more servers, an indication that the device has stopped recording video of the scene. This allows the server to send different video data to any devices that were receiving video data from the device that subsequently stopped recording, thereby minimising or eliminating interruption to the viewing experience of the users of such devices.

The method may further comprise receiving, from the one or more servers, audio data corresponding to a third video recorded by one of a plurality of devices that are each recording video of the scene from a distinct location. This means that the device can receive audio and video data of the scene from different sources. For example, the device may receive audio data from a consistent source, while viewing videos associated with video data from different sources.

The method may further comprise: sending, to the one or more servers, a request for video data associated with a third location that is different to the second location; and receiving, from the one or more servers, an indication that there is no video data associated with the third location.

According to a third aspect of the present disclosure, there is provided a computer-readable medium comprising computer-executable instructions that, when executed by one or more processors of a computing device, cause the computing device to carry out the method of the first aspect.

According to a fourth aspect of the present disclosure, there is provided a computer-readable medium comprising computer-executable instructions that, when executed by one or more processors of a computing device, cause the computing device to carry out the method of the second aspect.

### BRIEF DESCRIPTION OF FIGURES

Specific embodiments are described below by way of example only and with reference to the accompanying drawings, in which:
FIG. 1 shows a plurality of recording devices recording video of a scene, along with a remote device and a server.
FIG. 2 shows an application window for display on a recording device.
FIG. 3A shows an arrangement in which two recording devices are matched, and an arrangement in which two recording devices are unmatched.
FIG. 3B shows an arrangement in which two out of three recording devices are matched, and an arrangement in which three recording devices are matched.
FIG. 3C shows an arrangement in which fields of view of recording devices converge at multiple convergence locations.
FIG. 4A shows a plurality of recording devices recording video of a scene according to an example described below.
FIG. 4B is a timing diagram indicating the times at which the recording devices in FIG. 4A are recording video of the scene.
FIG. 5 is a flowchart of a method, implemented at a recording device that is recording video of a scene, for allowing different videos of the scene to be viewed on the recording device.
FIG. 6 is a flowchart of a method, implemented at a remote device that is remote from a scene, for allowing different videos of the scene to be viewed on the remote device.
FIG. 7 is a flowchart of a method, implemented at a server, for allowing different videos of a scene to be viewed on a device.
FIG. 8 is a flowchart of a method, implemented at a recording device, for initialising a grouping of devices that are recording video of a scene.
FIG. 9 is a flowchart of a method, implemented at a server, for initialising a grouping of recording devices that are recording video of a scene.
FIG. 10 is a schematic diagram of a device that is configured to implement the methods described herein.

### DETAILED DESCRIPTION

### Overview

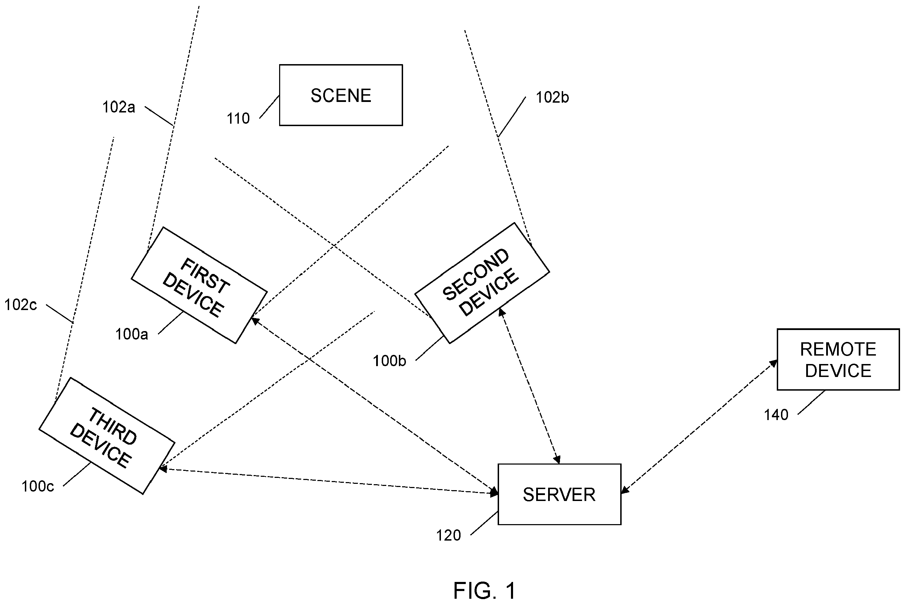

FIG. 1 is a schematic diagram showing a plurality of recording devices 100 recording video of a scene 110. In particular, FIG. 1 shows three recording devices 100 (a first recording device 100a, a second recording device 100b, and a third recording device 100c) recording video of the scene 110. Each of the recording devices 100 is in communication with a remote server 120, as illustrated schematically by the dashed arrows connecting the server 120 and the recording devices 100. The recording devices 100 may be, for example, mobile communications devices with video recording capability, such as smartphones. Also shown in FIG. 1 is a remote device 140, which is not recording video of the scene 110. The remote device 140 is described in more detail below.

Although the implementations described below are explained with reference to smartphones, it will be appreciated that other devices may be used to carry out the implementations described herein (e.g. the video may be recorded by a camera with wireless connectivity, or by smart-glasses with built-in camera and GPS, or by smart-glasses connected to a nearby device such as a smartphone for connectivity to the Internet). In addition, for ease of reference, a single server 120 is referred to in the examples below. However, the present disclosure may be implemented using a plurality of servers (e.g. a server farm) that perform the functions of the server 120 referred to below. For example, certain functions may be carried out by a first one of a plurality of servers, while other functions are carried out by a second one of the plurality of servers.

Each recording device 100 has a field of view 102 that includes the scene 110. In the example shown in FIG. 1, the first recording device 100a has a field of view 102a that includes front and left sides of the scene 110, the second recording device 100b has a field of view 102b that includes front and right sides of the scene 110, and the third recording device 100c has a field of view 102c that includes front and left sides of the scene 110. The third recording device 100c is located at the same angular position with respect to the scene 110 as the first recording device 100a, but is located further from the scene 110 than the first recording device 100a. Therefore, assuming that the zoom levels of the videos recorded by the first recording device 100a and the third recording device 100c are the same, the scene 110 occupies a lower proportion of the field of view 102c of the third recording device 100c than the field of view 102a of the first recording device 100a.

Each of the recording devices 100 sends video data corresponding to the video recorded by that recording device 100 to the server 120. Each of the recording devices 100 also sends, to the server 120, location data identifying the location of the recording device 100, and orientation data identifying the orientation of the field of view 102 of the recording device 100. The location of each recording device 100 may be determined by a GPS subsystem of the recording device 100 and the orientation may be determined by a magnetometer of the recording device 100 (as described below).

The server 120 stores the video data, location data and orientation data received from the recording devices 100. The server 120 uses the location and orientation data from the recording devices 100 to determine the relative locations of the recording devices 100 with respect to the scene 110. For example, the server 120 may construct a virtual map identifying the relative locations of the recording devices 100 and the scene 110.

The location of the scene 110 may be determined from the orientation data (e.g. where the fields of view 102 of different recording devices 100 overlap), as described further below. In the example shown in FIG. 1, the server 120 determines that: the first recording device 100a is located to the left of the second recording device 100b and in front of the third recording device 100c; the second recording device 100b is located to the right of the first and third recording devices 100a, 100c, and is closer to the scene 110 than the third recording device 100c; and the third recording device 100c is located to the left of the second recording device 100b and is further from the scene 110 than the first and second recording devices 100a, 100b. In this context, the "location" of a recording device 100 with respect to the scene 110 refers to the angular position of the recording device 100 with respect to the scene 110 and the distance of the recording device 100 from the scene 110.

Each recording device 100 displays the recorded video in an application running on the recording device 100. The application allows a user of the recording device 100 to provide an input indicating that they would like to view a video of the scene 110 from a different location. As one example, the application may allow a user to provide a swipe gesture on a touchscreen of the recording device 100. Examples of suitable gestures include: a swipe-left gesture, indicating that the user would like to view video from a location to the left of the location associated with the video currently being displayed; a swipe-right gesture, indicating that the user would like to view video from a location to the right of the location associated with the video currently being displayed; a double-tap or pinch-in gesture, indicating that the user would like to view video from a location closer to the scene 110 than the location associated with the video currently being displayed; and a pinch-out gesture, indicating that the user would like to view video from a location further away from the scene 110 than the location associated with the video currently being displayed.

In one specific example of the system shown in FIG. 1, the user of the second recording device 100b provides a swipe gesture on the touchscreen of the recording device 100, in order to switch from the video currently being displayed to a video recorded from a different location. Initially, the second recording device 100b is recording the scene 110. An application running on the second recording device 100b displays the video recorded by the second recording device 100b on a touchscreen of the second recording device 100b.

The swipe gesture provided by the user is a swipe-left gesture, indicating that they would like to view video from a location to the left of the location associated with the video currently being displayed (i.e. the location of the second recording device 100b). The application running on the second recording device 100b sends a request to the server 120, requesting video data from the recording device 100 to the left of the second recording device 100b. The server 120 determines that the next recording device 100 to the left of the second recording device 100b is the first recording device 100a. The server 120 sends video data received from the first recording device 100a to the second recording device 100b. The application running on the second recording device 100b then displays the video recorded by the first recording device 100a on the touchscreen of the second recording device 100b.

The user then provides a pinch-out gesture, indicating that they would like to view video from a location further away from the scene 110 than the location associated with the video currently being displayed (i.e. the location of the first recording device 100a). The application running on the second recording device 100b sends a further request to the server 120, requesting video data from the recording device 100 located further from the scene 110 than the first recording device 100a. The server determines that the next recording device located a greater distance from the scene 110 than the first recording device 100a is the third recording device 100c. The server 120 sends video data received from the third recording device 100c to the second recording device 100b. The application running on the second recording device 100b then displays the video recorded by the third recording device 100c on the touchscreen of the second recording device 100b.

Although only three recording devices 100 are shown in FIG. 1, it will be appreciated that the above disclosure is applicable to scenes 110 that are being recorded by multiple recording devices 100. Where multiple recording devices 100 are recording a scene 110, a user of a recording device 100 can scroll through the various videos being recorded by repeatedly swiping and/or pinching. For example, repeated left swipe commands would display videos being recorded further and further to the user's left.

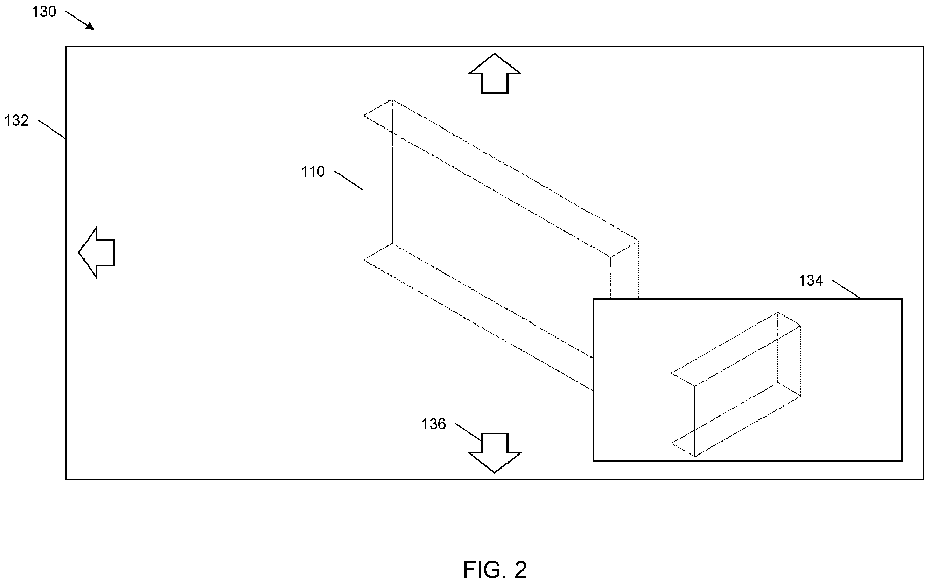

In one example, the application running on the second recording device 100b displays the video recorded by another recording device 100 at the same time as the video recorded by the second recording device 100b. For example, as described in more detail with reference to FIG. 2, the application may display the video recorded by the second recording device 100b in a reduced-size window overlaid on the main application window that is displaying the video recorded by another recording device 100. The overlaid window may be displayed in a corner of the main application window.

The application allows videos being recorded by different recording devices 100 to be viewed on a particular recording device 100 while live video is being recorded by the particular recording device 100. In other words, the application allows the simultaneous recording of a scene 110 by a recording device 100 and playback of different videos of the scene 110 on the recording device 100. The application may also allow the video recorded by the recording device 100 to be stored locally on the recording device 100.

In addition to sending location and orientation data to the server 120, the recording devices 100 may also send altitude data (if available) indicating the altitude of each recording device 100. The altitude data may be determined by the recording device 100 using GPS and/or pressure sensors. Where altitude data is provided, the server 120 may determine the relative locations of the recording devices 100 in three-dimensions (e.g. using a three-dimensional virtual map). Where three-dimensional relative locations are determined, the "location" of a recording device 100 with respect to the scene 110 refers to the angular position of the recording device 100 with respect to the scene 110, the distance of the recording device 100 from the scene 110, and the elevation of the recording device 100 with respect to the scene 110. A user of a recording device 100 may request video data from a location above or below the location associated with the video currently being displayed using a swipe-up or swipe-down gesture on the touchscreen of the recording device 100.

### Remote playback

The server 120 stores all video data uploaded by recording devices 100 that record video of the scene 110. This allows two further modes of operation over the method described above. Firstly, videos of the scene 110 can be viewed by remote devices 140 that are remote from the scene 110 (i.e. devices that are not recording video of the scene 110, as shown by the remote device 140 in FIG. 1), in real-time (i.e. while the videos are being recorded by recording (non-remote) devices 100). The remote device 140 may be, for example, a laptop or PC. The application may be downloaded to the remote device 140, or the application may run in a browser installed on the remote device 140. Secondly, recorded videos of the scene 110 can be viewed after the event (i.e. non-live). Each of these modes is described in more detail below.

The application described above may allow a user to view videos of a scene 110 either as a recording device 100, or as a remote device 140. In either scenario, a user of the device 100, 140 can utilise a touch gesture to switch between videos recorded by recording devices 100, as described above. In addition, remote devices 140 can also receive different user inputs (e.g. voice input, mouse, keyboard, etc.) in order to switch between videos recorded by recording devices 100. Such alternative input methods can, of course, be used by users of recording devices 100, but may not be practical at a large-scale event such as a concert or sports fixture.

For a recording device 100, the application initially displays the video that is being recorded by the recording device 100. However, for a remote device 140, no video is being recorded by the remote device 140. Instead, the application settings determine the video that is to be initially displayed in the main window 130 of the application running on the remote device 140. For example, the initial video to be displayed may be determined based on one or more configurable parameters including: the location of the recording device 100 (e.g. nearest to the scene 110, furthest from the scene 110, most centrally located device 100 with respect to the scene 110); quality of hardware (e.g. prioritising recording devices 100 with the highest quality hardware); and/or degree of popularity of the video recorded by the recording device 100 (e.g. highest rated or most kudos received). These parameters can be configured by a user of the remote device 140. The configured parameters are sent to the server 120 in order for the server 120 to determine the first video to be displayed in the application running on the remote device 140. Once the server 120 has determined the first video to be displayed, the video data associated with that video is sent to the remote device 140. A user of the remote device 140 can then request different videos of the scene 110 in the same was as described above.

Recorded videos can be viewed after the event (i.e. non-live) by devices 100, 140. In such a scenario, all devices are considered to be remote devices, because no devices are functioning as recording devices 100 (as the event has ended). The first video to be displayed can be determined using the user-configurable settings in the same way as for the remote devices 140 described above. Once the first video is displayed, the user can provide a touch gesture or other user input to switch between videos of the scene 110 that were recorded by different recording devices 100, in the same way as described above with reference to FIG. 1.

The sequence of videos that a user of the application views is logged, either by the application (and stored on the device 100, 140), and/or by the server 120. This sequence is logged if the application is being used to record video of a scene 110 (i.e. used on a recording device 100), and also if the application is being used remotely (i.e. used on a remote device 140). The application then provides the user with the option of automatically playing back the video again using the same sequence of videos, or manually switching between videos as described with reference to FIG. 1.

### Example interface

FIG. 2 is a schematic diagram of an example display 130 of the application running on a recording device 100. The display 130 includes a main window 132 and an overlay window 134. In this example, the user of the recording device 100 is recording a scene 110 and is located in front of and to the left of the scene 110, and is positioned higher than the scene 110. The video recorded by the recording device 100 is displayed in the overlay window 134. The user has requested video (e.g. using a touch gesture such as a swipe gesture) recorded by a recording device 100 located in a different location to the user's current location.

In this example, the user has requested video recorded by a recording device 100 located front-right of and at higher elevation than the scene 110. This video is displayed in the main window 132 of the display 130.

Also shown in FIG. 2 are indicators 136 (in this example, arrows) displayed around the periphery of the main window 132. The indicators 136 indicate the availability of videos recorded by recording devices 100 to the left of, above and below the location of the recording device 100 that recorded the video displayed in the main window 132. The indicators 136 may be displayed in response to a notification from the server 120 indicating the position of other recording devices 100. Alternatively, the server 120 may send the recording device 100 information on the location of all other recording devices 100 recording video of the scene 110 (e.g. in the form of a virtual map), and the recording device 100 may use the received information to determine the relative positions of other recording devices 100 and, in turn, to determine which indicators 136 to display. In the example shown in FIG. 2, no indicator is shown on the right-hand side of the display 130. This informs the user of the recording device 100 that no video is available from recording devices 100 located to the right of the recording device 100 that recorded the video displayed in the main window 132.

### Initialisation

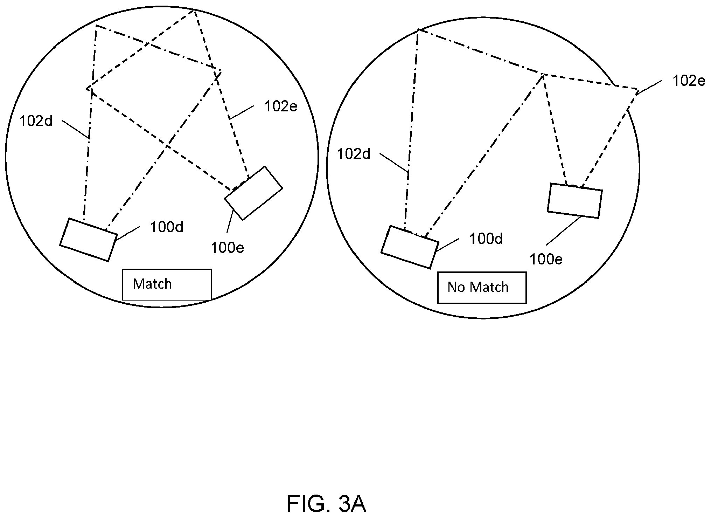

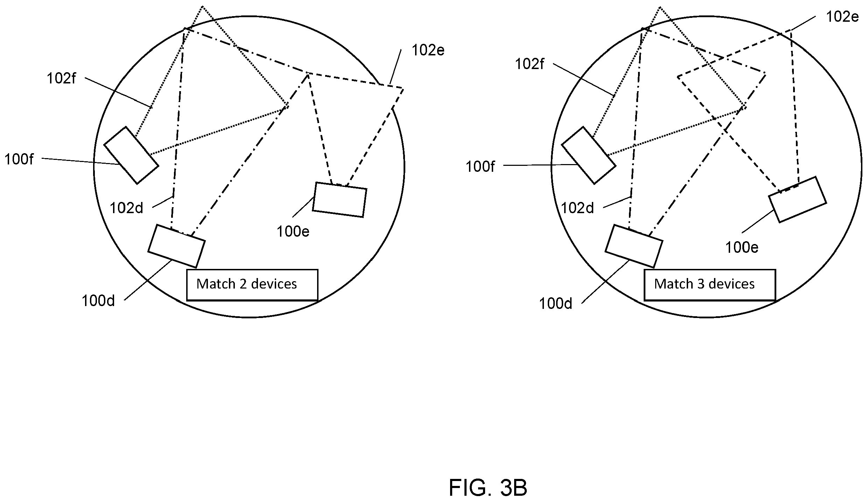

The process of determining that multiple recording devices 100 are recording video of a scene 110 is now described with reference to FIGS. 3A and 3B. FIG. 3A shows an example with two recording devices 100 in a similar geolocation, while FIG. 3B shows an example with three recording devices 100 in a similar geolocation. To start the process, a user of a recording device 100 starts the application described herein and starts recording video. The recording device 100 then sends user information, device information (including hardware specification), geolocation information and orientation information to the server 120. The server 120 then determines whether any other recording devices 100 are capturing video of the same scene 110 as the user's recording device 100. In particular, the server 120 determines if there are other recording devices 100 that (i) are using the application and recording video; and (ii) recording video of a convergent location. Specifically, the server 120 determines if there is an overlap between the fields of view 102 of recording devices 100 that are using the application and recording video. If so, then the convergent location is determined by the server to be a scene 110.

In the left-hand example shown in FIG. 3A, the fields of view 102 of recording device 100d and recording device 100e overlap. In particular, the two recording devices 100 are in a similar geolocation, as indicated by the circle surrounding recording devices 100d and 100e. In order to determine whether devices 100 are in a similar geolocation, a threshold (e.g. 100m) may be used. In some examples, the threshold can be configured by the user to be greater than or less than a default threshold such as 100m. For example, a threshold of 100m may be appropriate at a football stadium, whereas a smaller threshold may be appropriate at a small music venue.

Recording devices 100d and 100e are orientated such that their fields of view 102 overlap. This means that the server 120 determines that recording devices 100d and 100e are recording video of a convergent location, and determines the convergent location within the fields of view 102 to be the scene 110. Devices 100 can be considered to have convergent fields of view 102 if their fields of view 102 at least partially overlap within a threshold viewing distance from each devices 100. For example, devices 100 can be considered to have convergent fields of view 102 if their fields of view 102 overlap within a viewing distance of 100m of each device 100.

In the right-hand example shown in FIG. 3A, recording devices 100d and 100e are again in a similar geolocation, as indicated by the circle surrounding devices 100d and 100e. However, in this example, the fields of view 102 of the recording devices 100 do not overlap, because the recording devices 100 are orientated in divergent directions. In particular, the fields of view 102 of recording devices 100d and 100e do not overlap within a threshold viewing distance from recording device 100d. Accordingly, there is no convergent location within the fields of view 102 of both recording devices 100, meaning that the server 120 does not determine that both recording devices 100 are recording video of the same scene 110.

FIG. 3B shows a similar example with three recording devices 100 in a similar geolocation (again indicated by the circles surrounding the recording devices 100). In the left-hand example shown in FIG. 3B, the fields of view 102 of devices 100d and 100f overlap within a threshold viewing distance from each of devices 100d and 100f, meaning that these recording devices 100 are orientated in convergent directions. However, the field of view 102e of recording device 102e does not overlap the fields of view 102 of the other recording devices 100 within a threshold viewing distance from each respective recording device 100. Accordingly, the server 120 determines the scene 110 as the convergent location within the fields of view 102 of recording devices 100d and 100f only. In contrast, in the right-hand example shown in FIG. 3B, the fields of view 102 of all recording devices 100 overlap within a threshold viewing distance from each of the recording devices 100, meaning that all recording devices 100 are orientated in convergent directions. The server 120 determines the scene 110 as the convergent location within the fields of view 102 of all three recording devices 100.

Once multiple recording devices 100 are determined as recording a particular scene 110, these recording devices 100 are grouped according to their geolocation by the server 120. The grouping by the server 120 matches all of the recording devices 100 recording the same scene 110 together. This allows any one of the recording devices 100 within the group to view videos recorded by any one of the other recording devices 100 within the group (e.g. in response to a touch gesture, as described above with reference to FIG. 1). The grouping is given a group ID.

Once a group of recording devices 100 recording video of a particular scene 110 has been identified, the server 120 stores the location of each recording device 100 within the group. The server 120 then determines, from the locations of the grouped recording devices 100, the location of each recording device 100 within the group, relative to the other recording devices 100 within the group. As one example, the server 120 may construct a virtual map of the grouped recording devices 100. The relative locations of the grouped recording devices 100 may be sent to each of the other recording devices 100 in the group. In this way, each recording device 100 can determine the indicators 136 to display in order to direct the user to videos that are being recorded by other recording devices 100 in the group.

In addition, after a recording device 100 recording video of a particular scene 110 has been matched with at least one other recording device 100, the server 120 sends a notification to the recording device 100 informing the recording device 100 that it is matched with other recording devices 100 in a group. Once the recording device 100 receives the notification from the server 120, the application running on the recording device 100 starts to upload video data to the server 120.

In an alternative example, the location of the scene 110 may be known in advance, meaning that the server 120 does not need to identify the scene 110 based on the fields of view 102 of the recording devices 100. For example, if recording devices 100 are recording videos within a geolocation of a venue such as a concert or football match, then the server 120 may store geolocation information concerning scenes of interest (e.g. a stage or a goal). Recording devices 100 may then be grouped if the known location of the scene 110 is within the field of view 102 of each recording device 100 (and optionally within a threshold distance of each recording device 100).

As a further alternative example, two or more of the recording devices 100 may each include a light detection and ranging (LiDAR) sensor. In this case, the location of a scene 110 such as a stage may be determined using the time taken for a laser beam emitted by the LiDAR sensor to be reflected by the scene 110 and received at the recording device 100. This allows the distance from the recording device 100 to the scene 110 to be determined. The location of the scene 110 can be determined using the geolocations and orientations of two recording devices 100 and the distance from each of the two recording devices 100 to the scene 110. Optionally, the location of the scene 110 can be determined using the geolocations of three recording devices 100 and the distance from each of the three recording devices 100 to the scene 100, without requiring orientation data.

### Convergence

The server 120 can assist users in orientating their recording devices 100 to record video of a particular scene 110. Two ways in which the server 120 may assist users include providing information on a point of interest, and directing a user to a scene 110 that a number of other recording devices 100 are recording. Both of these methods are described below.

At a particular venue such as a concert or football match, the server 120 may store geolocation information concerning scenes of interest. For example, the server 120 may store the geolocation of a stage at a concert, or the geolocation of a goal within a football stadium. When a user of a recording device 100 starts recording video within a distance of the scene of interest, the main window 130 of the application may include prompts to encourage the user to point the recording device 100 in the direction of the scene of interest. For example, arrows or other indicators may be displayed in the main window 130, directing the user to the scene of interest. The display of the indicators in the main window 130 may be adapted depending on the difference between the current orientation of the recording device 100 and the optimal orientation of the recording device 100 (i.e. pointing at the scene of interest). For example, the size and/or number of indicators (e.g. arrows) may be increased if the distance between the current orientation of the recording device 100 and the optimal orientation is large. The size and/or number of indicators may reduce as the user brings the orientation of the recording device 100 closer to the optimal orientation. The difference between the current orientation of the recording device 100 and the optimal orientation of the recording device 100 may be calculated at the recording device 100, based on a geolocation of the scene of interest that is sent from the server 120 to the recording device 100. Alternatively, the difference between the current orientation of the recording device 100 and the optimal orientation may be calculated at the server 120, which may send a command to the recording device 100 that dictates how the indicators are to be displayed (i.e. the size of the indicators and/or the number of indicators).

An example of the first orientation assistance method can be seen with reference to FIG. 3B. In this example, it is assumed that a scene of interest is located within the fields of view 102 of recording devices 100d and 100f (i.e. towards the top of the circle and aligned with a vertical centreline through the circle). When a user of recording device 100e starts recording video, they are directed to orientate their device towards the scene of interest. To orientate their recording device 100 to the optimal orientation in this example, the user should rotate the recording device 100e to the left. Accordingly, a left arrow may be displayed in the main window 132 of the application running on recording device 100e. The size of the arrow may decrease as the user rotates the recording device 100e towards the optimal orientation.

A second method involves directing the user to orientate the recording device 100 to a popular scene 110. If multiple users are filming a specific scene 110, then a user is directed to orientate their recording device 100 towards the popular scene 110 after they start recording video. In this example, the indicators 136 (e.g. arrows) displayed in the main window 132 of the application may indicate the number of users that are recording video of a scene 110 in a particular location. As with the example above (concerning points of interest), the size and/or number of the arrows may correlate to the degree of adjustment required to the orientation of the recording device 100. For example, a large right arrow accompanied by the number '10' would indicate to the user that there are ten other users recording video of a scene 110 to the right of the device's current field of view 102. At the same time, a smaller left arrow accompanied by the number '5' would indicate to the user that there are five other users recording video of a scene 110 to the left of the device's current field of view 102, but requiring less adjustment to the device's current orientation than the scene to the right. In this way, the user may choose which scene 110 they would like to start recording. As with the first method, the determination of the indicators 136 (e.g. arrows) to display may be made at the recording device 100 or at the server 120. In particular, the recording device 100 may determine the arrows to display based on the location information of other recording devices 100, received from the server 120 (e.g. in the form of a virtual map). Alternatively, the server 120 may determine the arrows to display and send a command to the recording device 100 dictating how the indicators are to be displayed (i.e. the size and/or number of the indicators, and the number of other recording devices 100).

An example of the second orientation assistance method can also be seen with reference to FIG. 3B. In this example, recording devices 100d and 100f are both recording video of a scene 110 within the overlap of their respective fields of view. When a user of recording device 100e starts recording video, they are directed to orientate their device towards the popular scene being recorded by recording devices 100d and 100f. To orientate their recording device 100 to the popular scene in this example, the user should rotate the recording device 100e to the left. Accordingly, a left arrow may be displayed in the main window 132 of the application running on recording device 100e, along with the number '2', indicating that two other recording devices 100 are recording video of the scene 110. The size of the arrow may decrease as the user rotates the recording device 100e towards the optimal orientation.

Once a new recording device 100 has been matched with other recording devices 100 that are grouped, the server 120 updates the relative locations of the grouped recording devices 100 to include the new recording device 100. The server 120 also sends a notification to the new recording device 100 that it has been matched with other recording devices 100 in a group. Once the new recording device 100 receives the notification from the server 120, the new recording device 100 uploads video data corresponding to video recorded by the new recording device 100 to the server 120. Once the server 120 receives the video data from the new recording device 100, other recording devices 100 in the group can choose to receive video data corresponding to the video recorded by the new recording device 100. Likewise, the new recording device 100 can choose to receive video data corresponding to the video recorded by any other of the recording devices 100 in the group.

In order to determine convergence using the fields of view 102 of recording devices 100, the server 120 collects data relating to the field of view 102 of each recording device 100 (for example based on the zoom level of the videos recorded by each recording device 100). This data assists the server 120 in calculating whether a particular recording device 100 is recording video within the same field of view 102 of other recording devices 100. If the device's field of view information is not available, then the server 120 will use an average value determined by an average field of view 102 of recording devices 100 that are recording video at the time, or a setting manually entered by the user.

In one example, a subset of the field of view 102 of each recording device 100 may be used when determining whether recording devices 100 are recording video of the same scene 110. For example, if each of the recording devices 100 has a field of view 102 of between 50 and 100 degrees (e.g. 72 degrees), then the subset of the field of view 102 may be a cone with a 20 degree angle at the centre of the field of view 102.

### Multiple convergence points

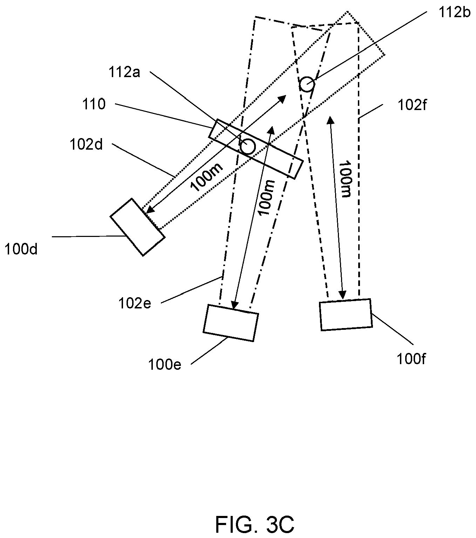

There may be some circumstances where multiple recording devices 100 are in the same geolocation and have fields of view 102 that converge at more than one point, as illustrated schematically in FIG. 3C.

For example, as shown in FIG. 3C, recording devices 100d and 100e have fields of view that converge at a first location, indicated as first convergence location 112a. In this example, the scene 110 is a stage located at the first convergence location 112a. However, the fields of view 102 of recording devices 100d, 100e and 100f converge at a second convergence location 112b, located further from the recording devices 100 than the first convergence location 112a. Accordingly, in this example, the server 120 identifies two convergence locations 112.

In this case, the server 120 notifies the recording devices 100 that there are multiple convergence locations 112 at this specific geolocation. The notification from the server 120 is displayed on the screen of the recording device 100, and informs the user that there are multiple convergence locations 112 based on the direction the recording device 100 is pointing. In one specific example, the notification provides information on the number of convergence locations 112 and the number of recording devices 100 associated with each convergence location 112 (i.e. the number of recording devices 100 having fields of view 102 that converge at each convergence location 112).

As described above, each recording device 100 may display indicators 136 (e.g. arrows) that indicate the convergence locations 112. For example, each convergence location 112 may be indicated using arrows of different sizes (or a different number of arrows), depending on the number of recording devices 100 having fields of view 102 that converge at that particular convergence location 112. Additionally, or alternatively, the indicator 136 associated with each convergence location 112 indicates the number of recording devices 100 having fields of view 102 that converge at that particular convergence location 112. Therefore, in the example shown in FIG. 3C, a recording device 100 in the same geolocation would display indicators 136 to indicate that three recording devices 100 (100d, 100e, 100f) have fields of view 102 that converge at the first convergence location 112a, while two recording devices 100 (100d, 100e) have fields of view 102 that converge at the second convergence location 112b. The indicators 136 assist the user to direct their recording device 100 towards the most popular convergence location 112, or inform the user of different viewing options associated with convergence locations 112, so that the user can choose which convergence location 112 to orientate their recording device 100 towards.

Where the location of the scene 110 is known, for example at a stadium (e.g. goal locations) or concert hall (e.g. stage location), the location of the scene 110 may be prioritised over other convergence locations 112, in order to assist a user in orientating their recording device 110 towards the known location of the scene 110. For example, the indicators 136 may direct a user to orientate their device towards the known scene location, without indicating the directions of other convergence locations 112.

Where a convergence location 112 is not a known scene location, the server 120 may implement a maximum distance from each recording device 100 in order to determine the convergence locations 112. The distance may be set by the server 120 as a default setting, or adjusted manually by the user in the settings of the application. For example, in the example shown in FIG. 3C, the server 120 may disregard locations at which fields of view 102 of the recording devices 100 converge if such locations are more than 100m from each of the associated recording devices 100. Therefore, in this example, the server 120 determines that the fields of view 102 of recording devices 100d and 100e converge at the first convergence location 112a, because the first convergence location 112a is within 100m of recording devices 100d and 100e. However, the server disregards the second convergence location 112b, because it is more than 100m away from recording devices 100e and 100f.

### Stopping recording

If there is sufficient bandwidth, or depending on the setting chosen by the user, each frame of the video data sent to the server 120 is associated with data including geolocation and orientation (and altitude data if available) of the recording device 100. In this example, location and orientation data (and optionally altitude data) are sent to the server 120 with each frame of video data (e.g. embedded within the video data), meaning that the recording devices 100 continuously send location and orientation data to the server 120. Specifically, any data collected by the device may be sent to the server 120 on a frame-by-frame basis (for example, data from magnetometer, accelerometer, gyroscope and/or pressure sensors. If there isn't sufficient bandwidth, then the data from the recording device 100 may be sent to the server 120 periodically rather than every single frame (for example, once every 10 frames, once a second, etc.).

The recording devices 100 periodically or continuously send location information to the server 120. This allows the server 120 to update the relative locations of grouped recording devices 100, in the event that certain recording devices 100 change location (e.g. by moving towards the scene 110). For example, the server 120 may update the virtual map in response to a change in location of one of the recording devices 100, and send an updated virtual map to the other recording devices 100 in the group. The location information and virtual map may be exchanged between the recording devices 100 and the server 120 continuously (e.g. every second), to ensure that the accuracy of the relative locations is maintained.

The application running on the recording device 100 continuously monitors for movement of the recording device 100 (e.g. as detected by an accelerometer and/or a gyroscope of the recording device 100). If the recording device 100 is moved away from recording the scene 110, then the application stops sending video data corresponding to video recorded by the recording device 100 to the server 120, and/or notifies the server 120 that the recording device 100 is no longer recording video of the scene 110. The application may determine that the recording device 100 is moved away from recording the scene based on the location information of the other recording devices 100 and the scene 110, as received from the server 120. Any other grouped recording devices 100 that were receiving video from this recording device 100 are sent video data corresponding to video recorded by the next-nearest recording device 100 in the group. Likewise, if the user stops recording video of the scene 110 (e.g. by pressing a 'stop' button, regardless of whether the user has moved the recording device 100), then any other users that were receiving video from this recording device 100 are sent video data corresponding to video recorded by the next-nearest recording device 100 in the group.

The determination of whether the recording device 100 is no longer recording video of the scene 110 may alternatively, or additionally, be carried out at the server 120. To carry out this determination, the server 120 monitors the location information received from the recording device 100 and compares it to the locations of the other recording devices 100 in the group. If the server 120 determines that the recording device 100 has moved away from other recording devices 100 in the group (e.g. by exceeding a threshold distance from the group), then the server 120 removes the recording device 100 from the group and redirects any devices viewing video captured by that recording device 100 to video captured by other recording devices 100 in the group.

The recording devices 100 may also periodically or continuously send orientation information to the server 120. In this case, the server 120 can periodically or continuously determine whether the recording device 100 is recording video of the scene 110. In particular, the server 120 can compare the location and orientation of the recording device 100 to the location of the scene 110, in order to determine whether the scene 110 is within the field of view 102 of the recording device 100. If the server 120 determines that the scene 110 is no longer within the field of view 102 of the recording device 100, then the server 120 removes the device from the group and redirects any recording devices 100 viewing video captured by that device to video captured by other recording devices 100 in the group.

If the server 120 determines that a particular recording device 100 is not in the same location as the other grouped recording devices 100, or is orientated such that it is not recording video of the scene 110, then it may send a command to that particular recording device 100 for it to stop sending video data. Alternatively, the server 120 may discard any video data that it continues to receive from that particular recording device 100.

If a recording device 100 stops recording video of the scene 110 (and therefore ceases to act as a recording device 100), then the device can continue to receive video data corresponding to videos recorded by other recording devices 100 in the group (thereby acting as a remote device 140, as described above).

In some examples, recording devices 100 that were viewing video captured by a recording device 100 that has stopped recording video of the scene 110 are automatically sent video data corresponding to video recorded by the next-nearest recording device 100 in the group. However, other criteria may be used. For example, recording devices 100 may be sent video data corresponding to video recorded by the recording device 100 with the highest quality hardware. Alternatively, other video prioritisation criteria, discussed in more detail below, may be used. In some examples, a combination of criteria are used. For example, if two other recording devices 100 are located close to a recording device 100 that stops recording video of the scene 110, then other users may be sent video data corresponding to video recorded by whichever of the two recording devices 100 has the highest quality hardware.

Once the recording device 100 is located and/or orientated so that the scene 110 is once again within the field of view 102 of the recording device 100, the server re-adds the recording device 100 to the group and notifies the recording device 100 that it has been re-added to the group. Upon receipt of the notification, the application uploads video data to the server 120.

### Video prioritisation

Where a large number of videos are being recorded by different recording devices 100, the server 120 prioritises videos for playback. For example, when a user provides a touch gesture indicating that they would like to view video recorded by a recording device 100 to their left, the server 120 may provide the video data corresponding to the highest quality video of the videos recorded by the five grouped recording devices 100 to the left of the current recording device 100.

Various criteria may be used by the server 120 to determine the videos that are prioritised. Examples include the locations of the grouped recording devices 100, the hardware quality of the grouped recording devices 100, and the popularity of the videos recorded by the grouped recording devices 100. For example, when a user swipes left, video recorded by a recording device 100 that is closer to the scene 110 may be prioritised over video recorded by a recording device 100 that is further away from the scene 110. As another example, video recorded by a recording device 100 that has a better hardware specification (e.g. camera resolution) may be prioritised over video recorded by a device with a worse hardware specification. As a further example, videos that are currently being viewed by multiple recording devices 100 in the group may be prioritised over videos that are being viewed by one or no recording devices 100 in the group. In some examples, the server 120 may prioritise the videos based on a combination of these factors.

The server 120 can also maintain a rating (or 'kudos') system for the grouped recording devices 100. When a recording device 100 in the group receives video data corresponding to video recorded by another recording device 100 in the group, the user of the recording device 100 receiving the video has the opportunity to rate or give kudos to the video that they are receiving.

In addition, the server 120 may automatically apply a kudos rating to each video, based on the number of users that view the video and the length of time that such users view the video. The kudos rating may also be applied to the recording device 100 that recorded the video, and/or to the user account associated with the recording device 100. For example, if 2 users watch a duration of 1 minute of a recording from device 100e, the specific recording receives 2 points, and the recording device 100e and/or user account associated with recording device 100e receive 2 points. As another example, if one user watches a duration of 1 minute, a second user watches a duration of 90 seconds, and a third user watches a duration of 15 seconds, then the recording and the recording device 100e receive 2.75 points ((60+90+15)/60). When the recording device 100e goes on to record a different recording at a different time and place, the recording device 100e will already have amounted kudos points, meaning that videos recorded by the recording device 100e may be prioritised. The kudos points structure described above is given by way of example only, and the skilled person will appreciated that the specific calculations involved may be changed.

In this way, a rating can be associated with each video that is recorded by recording devices 100 in the group. If the server 120 prioritises videos based on the popularity of the videos, then the popularity ranking can, in some examples, be based on the rating or kudos associated with each video.

The rating or kudos system encourages users to record events using the application, and incentivises the use of better recording equipment, uninterrupted recording, and recording scenes 110 from better positions.

### Audio ranking

The server 120 identifies audio attributes associated with each of the videos recorded by recording devices 100 in the group. For example, from the video data received from the recording devices 100 in the group, the server 120 measures the audio volume and the bass and treble levels. In some examples, the server 120 also receives audio hardware information from the recording device 100 (which may be sent by the recording device 100 to the server 120 when the recording device 100 starts recording video). The server 120 uses the measured audio attributes and audio hardware information to rank the audio associated with each video. The server 120 then selects the video with the highest ranked audio as a default audio source. All recording devices 100 that receive video data corresponding to video recorded by another recording device 100 also receive audio data corresponding to the video selected as the default audio source.

If the recording device 100 recording video with the highest ranked audio stops recording video of the scene 110 (as described further below), then the video with the next-highest ranked audio is used as the default audio source.

The application provides a user with the option to choose between individual audio sources and the default audio source. In other words, the application settings allow a user to select a single, default audio source that provides a seamless audio experience across different videos, or to receive audio recorded by the recording device 100 that recorded the video.

### Synchronisation

For all videos recorded by recording devices 100 in a group, the server 120 time stamps the videos and synchronises the videos using the time stamps. For example, the server 120 may use time stamps in the metadata, if available, associated with the videos received from each recording device 100 to synchronise the videos. Alternatively, the server 120 may synchronise the videos according to the time of receipt of the video data at the server 120. This provides continuity for the user when switching between videos recorded by different recording devices 100.

### Registry of videos

The server 120 stores a registry of videos in a database at the server 120. In one example, videos are stored in the database based on time and geolocation format. Videos are always linear in time and are time/date stamped. Videos are then grouped based on geolocation and finally sub-grouped into videos converging on a specific scene 110. The start time of a specific sub-group is determined as the point when two or more videos of a particular scene 110 are being recorded in the same geolocation, and the end time of a specific sub-group is determined as the point when fewer than two videos of that particular scene 110 are being recorded.

For major recognised events and locations, for example a concert at an arena or a football match at a stadium, the sub-group can be named by the server 120 to correlate to the event, for example, "Team A vs Team B at Named Stadium - Date and Time". For non-major recognised events, then the user recording the video may choose from pre-set tags or manually enter a title or description. When multiple recording devices 120 are recording videos of a scene 110, the server 120 may use common words in the tags to create a title for the sub-group.

The database may be accessed through an application or a website (e.g. by a remote device 140). The access to the database may be open/free and/or pay-per-view and/or on a subscription-based service. Users may be provided with the functionality to search for sub-groups based on location, date/time, title, or text description/tags.

### Example

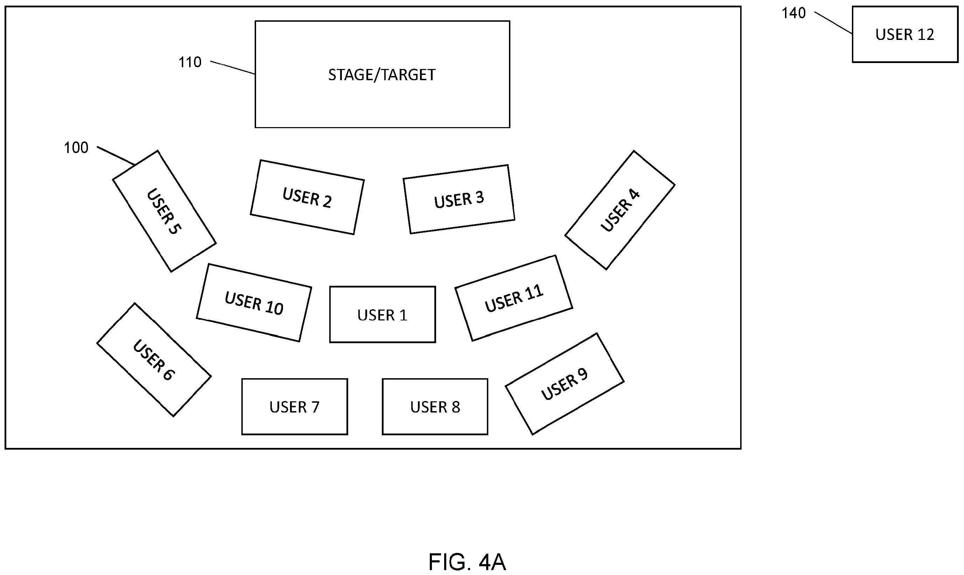

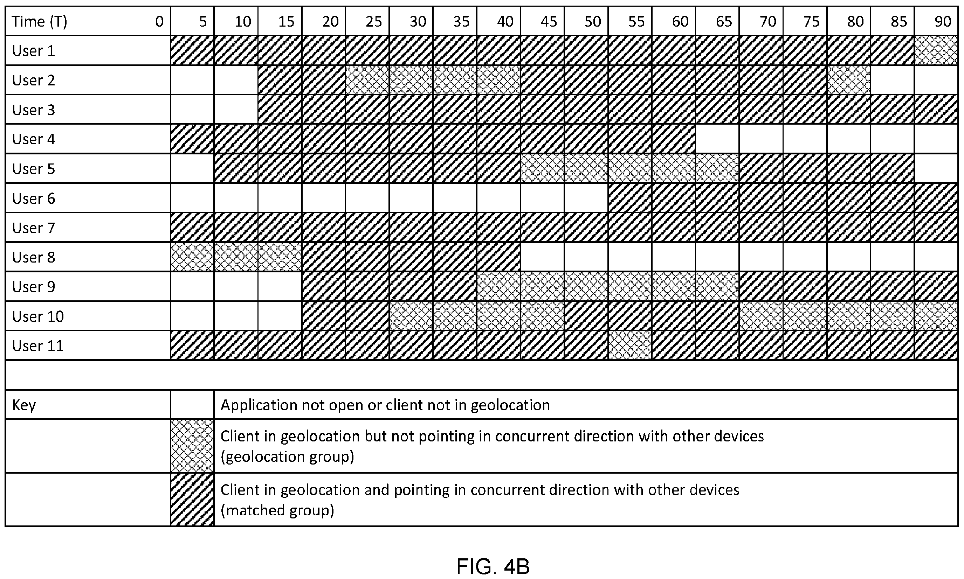

FIG. 4A shows an example of the implementations described above. FIG. 4A shows the locations and orientations of recording devices 100 that are recording video of a scene 110 ("stage/target" in FIG. 4A). Each recording device 100 is associated with a separate, numbered user. Also shown in FIG. 4A is a remote device 140, which is not recording video of the scene 110. FIG. 4B is a timing chart showing the times at which each recording device 100: (i) does not have the application open, or is not in the geolocation associated with the group (i.e. is not recording video of the scene 110); (ii) is in the geolocation associated with the group and is recording video, but is not orientated so that a video of the scene 110 is captured; and (iii) is in the geolocation associated with the group and is recording video of the scene 110.

Two scenarios are described below. The first scenario relates to the application running on the recording device 100 of User 1. The second scenario relates to the application running on the remote device 140 of User 12.

### Scenario 1:

At time T=0, User 1 is recording video of the scene 110 using a recording device 100 and sending video data corresponding to the recorded video to a remote server 120 (not shown in FIG. 4A).

At T=5, User 1 provides a swipe-right touch gesture, requesting video captured by a recording device 100 to their right. The request is sent from the recording device 100 to the server 120, which sends video data corresponding to video captured by User 11 in response to the request.

At T=15, User 1 provides a further swipe-right touch gesture, which prompts the recording device 100 to send a request to the server 120. In response, the server 120 sends video data corresponding to video captured by User 4.

At T=20, User 1 provides a pinch-in touch gesture, which prompts the recording device 100 to send a request to the server 120. In response, the server 120 sends video data corresponding to video captured by User 3.

At T=25, User 1 provides a swipe-left touch gesture, which prompts the recording device 100 to send a request to the server 120. At T=25, the user to the left of User 1 (i.e. User 2) is not recording video of the scene 110. Therefore, in response to the request, the server 120 sends video data corresponding to video captured by the next recording device 100 to the left (i.e. User 5).

At T=35, User 1 provides a pinch-out touch gesture, which prompts the recording device 100 to send a request to the server 120. At T=35, the user indicated in FIG. ... as being behind user 5 (i.e. User 6) is not in the geolocation and is therefore not grouped with the other recording devices 100. Therefore, in response to the request, the server 120 sends video data corresponding to video captured by the next-nearest recording device 100 to User 6 (i.e. User 7).

At T=40, User 1 provides a swipe-right touch gesture, which prompts the recording device 100 to send a request to the server 120. In response to the request, the server sends video data corresponding to video captured by User 11.

At T=50, User 11 moves their recording device 100 away from the scene 110, so that it is not recording video of the scene 110. This is detected by the server 120, which identifies the recording devices 100 of Users 3 and 4 as being the next-nearest to User 11. The server 120 identifies that the recording device 100 of User 4 has higher quality hardware than the recording device 100 of User 3. Accordingly, the server 120 sends video data corresponding to video captured by User 4 to the recording device 100 of User 1.

At T=60, User 4 stops recording video altogether. The server 120 detects that User 4 has stopped recording video of the scene 110, and sends video data corresponding to video captured by the next-nearest recording device 100 (i.e. User 3).

At T=75, User 1 provides a pinch-in touch gesture, which prompts the recording device 100 to send a request to the server 120. In response, the server 120 sends a notification to the recording device 100 of User 1, indicating that no videos of the scene 110 are being captured by recording devices 100 that are located closer to the scene than the recording device 100 of User 3.

At T=80, User 1 provides a swipe-left touch gesture, which prompts the recording device 100 to send a request to the server 120. In response, the server 120 sends video data corresponding to video captured by User 5 (as User 2 has stopped recording video of the scene 110).

At T=85, User 1 moves their recording device 100 away from the scene 110, so that it is not recording video of the scene 110. This is detected by the server 120, which sends different video data to any recording devices 100 that were receiving video data corresponding to the video captured by the recording device 100 of User 1. The change in orientation of the recording device 100 of User 1 is also detected by the application running on the recording device 100 of User 1, which stops sending video data to the server 120.

### Scenario 2:

User 12 is watching videos of the scene 110 on a remote device 140 from home, live (i.e. in real-time). The application running on the remote device 140 of User X includes settings that are configured such that the most centrally-located video is prioritised.

At T=0, the audio from the recording device 100 of User 4 is determined by the server 120 to be the highest quality. The configured settings of the application running on the remote device 140 dictate that User 12 is sent video data corresponding to video recorded by User 1. As User 4 has the highest quality audio, audio data corresponding to the audio from the video captured by User 4 is sent together with the video data corresponding to the video captured by User 1.

At T=5, User 12 provides a pinch-out touch gesture, which prompts the remote device 140 to send a request to the server 120. Two recording devices 100 are located behind the recording device 100 of User 1 (i.e. the devices 100 of Users 7 and 8). As User 8 is not recording video of the scene 110 at T=5, the server 120 sends video data corresponding to the video captured by User 7. The server 120 continues to send audio data corresponding to the audio from User 4.

At T=10, User 1 provides two consecutive swipe-right touch gestures, which prompts the remote device 140 to send a request to the server 120. In response, the server 120 sends video data corresponding to video captured by User 4 (as Users 8 and 9 are not yet recording video of the scene 110), together with audio data corresponding to the video recorded by User 4.

At T=60, User 4 stops recording video altogether. The server 120 detects that User 4 has stopped recording video of the scene 110, and sends video data corresponding to video captured by the next-nearest recording device 100 (i.e. User 3). The server 120 determines that the video recorded by the recording device 100 of User 11 has the next-highest ranked audio quality, so sends audio data corresponding to the video recorded by User 11.

### Methods

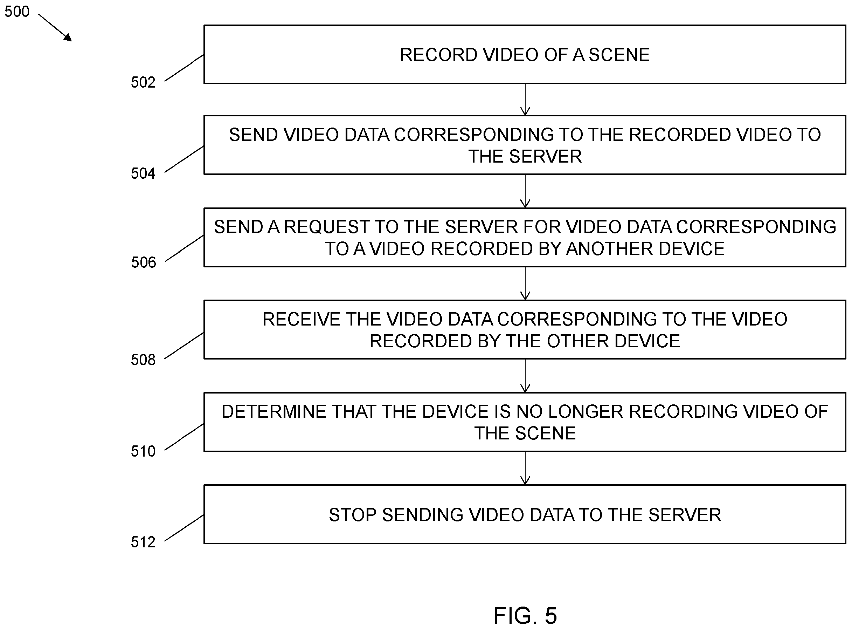

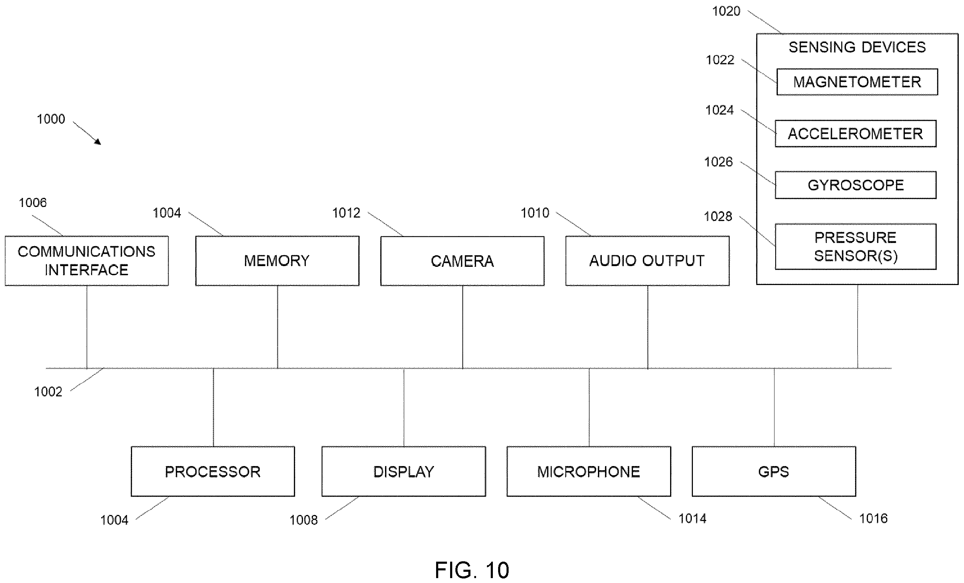

FIG. 5 is a flowchart of a method 500, implemented at a device that is recording video of a scene 110, for allowing different videos of the scene 110 to be viewed on the device. The method 500 may, for example, be implemented at one or more processors of the recording device 100 shown in FIG. 1 (e.g. at the processor 1004 of the device 1000 shown in FIG. 10). In particular, the method 500 may be implemented in the form of an application comprising instructions stored on a transitory or non-transitory computer-readable medium (as described further below), wherein the instructions are executable by the one or more processors of the recording device 100 to cause the recording device 100 to implement the method 500.

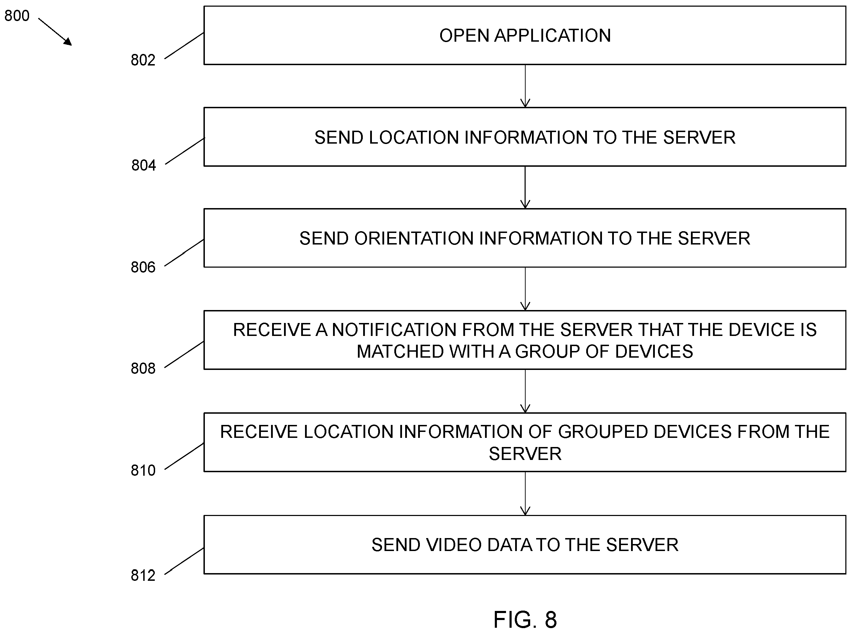

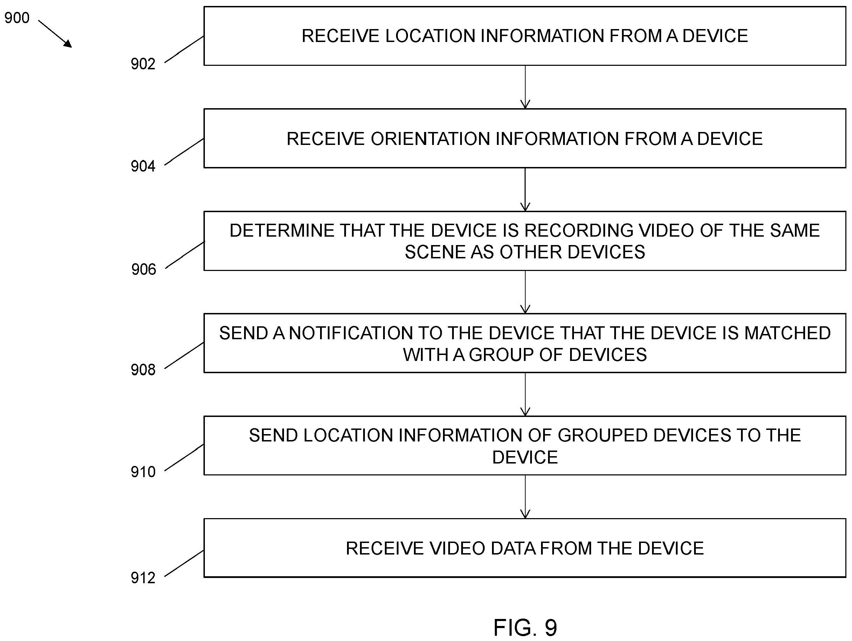

At 502, the recording device 100 records a video of a scene 110. Videos of the scene 110 are also being recorded by other recording devices 100 that are in a similar geolocation to the recording device 100. For example, the recording devices 100 in the similar geolocation may have been matched together as a group of recording devices 100 by a server 120, as described above and as set out in further detail with reference to FIGS. 8 and 9.

At 504, the recording device 100 sends video data corresponding to the video recorded at 502 to the server 120. The video data is sent to the server 120 in real-time (i.e. as the video is being recorded).

At 506, the recording device 100 sends a request to the server 120. The request sent to the server 120 is for video data corresponding to a video recorded by another recording device 100 in the similar geolocation. The request may be sent in response to an input from a user of the recording device 100, such as a touch gesture.

At 508, the recording device 100 receives, from the server 120, the video data corresponding to the video recorded by the other recording device 100. The recording device 100 then displays the video recorded by the other recording device 100 in a display of the recording device 100 (e.g. in a main window 130 of an application running on the recording device 100, while the video being recorded by the recording device 100 is, for example, displayed in a smaller, overlaid window 140).

At 510, the recording device 100 optionally determines that it is no longer recording video of the scene 110. For example, the recording device 100 may determine that it is no longer recording video of the scene 110 based on movement detected by an accelerometer and/or a gyroscope of the recording device 100. This determination may further be based on location information of the other recording devices 100 and the scene 110, as received from the server 120. As a further example, the recording device 100 may detect that the user has stopped recording video altogether.

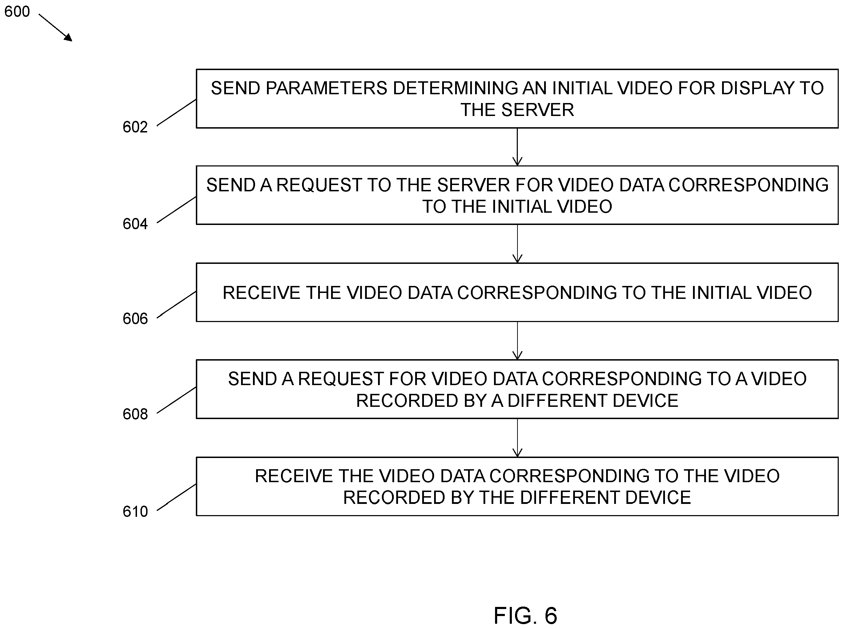

At 512, the recording device 100 optionally stops sending video data to the server 120. If 60 is omitted and the determination that the recording device 100 is no longer recording video of the scene 110 is made at the server 120, then the server 120 may send a command to the recording device 100, directing it to stop sending video data. If the recording device 100 continues to send video data to the server 120, then this may be discarded by the server 120. The device continues to receive the video data corresponding to the video recorded by the other recording device 100, but now acts as a remote device 140 (as discussed with reference to FIG. 6).

FIG. 6 is a flowchart of a method 600, implemented at a device that is remote from a scene 110, for allowing different videos of the scene 110 to be viewed on the device. The method 600 may, for example, be implemented at one or more processors of the remote device 140 shown in FIG. 1 (e.g. at the processor 1004 of the device 1000 shown in FIG. 10). In particular, the method 600 may be implemented in the form of an application comprising instructions stored on a transitory or non-transitory computer-readable medium (as described further below), wherein the instructions are executable by the one or more processors of the remote device 140 to cause the remote device 140 to implement the method 600. As explained above, the term "remote device" is intended to encompass devices that display videos of a scene 110 that were recorded at an earlier point in time (i.e. non-live or non-real-time display of videos of the scene 110).

At 602, the remote device 140 optionally sends parameters determining an initial video for display on the remote device 140 to the server 120. The parameters may be configured by the user in the settings of an application running on the remote device 140. The parameters may include one or more of: the location of a recording device 100 with respect to the scene 110, the hardware quality of the recording device 100, and the degree of popularity of a video recorded by the recording device 100.

At 604, the remote device 140 sends a request to the server 120 for video data corresponding to the initial video. In response, the server 120 determines, based on the parameters sent at 602, the initial video from videos of the scene 110 recorded by a group of recording devices 100 in a similar geolocation.

At 606, the remote device 140 receives, from the server 120, the video data corresponding to the initial video. The remote device 140 then displays the initial video in a display of the remote device 140.

At 608, the remote device 140 sends a request to the server 120. The request sent to the server 120 is for video data corresponding to a video recorded by another recording device 100 (i.e. a different recording device 100 to the recording device 100 that recorded the video determined as the initial video). The request may be sent in response to an input from a user of the remote device 140, such as a touch gesture.

At 610, the remote device 140 receives, from the server 120, the video data corresponding to the video recorded by the other recording device 100. The remote device 140 then displays the video recorded by the other recording device 100 in a display of the remote device 140.

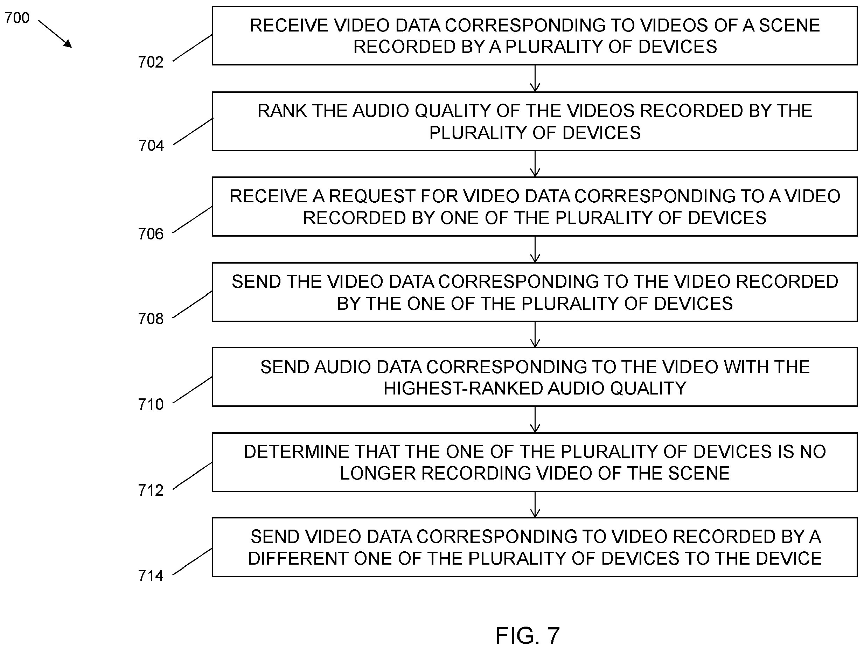

FIG. 7 is a flowchart of a method, implemented at a server, for allowing different videos of a scene to be viewed on a device. The method 700 may, for example, be implemented at one or more processors of one or more servers (e.g. the server 120 shown in FIG. 1). In particular, the method 700 may be implemented in the form of instructions stored on a transitory or non-transitory computer-readable medium (as described further below), wherein the instructions are executable by the one or more processors of the server 120 to cause the server 120 to implement the method 700.

At 702, the server 120 receives video data corresponding to videos of a scene 110 recorded by a plurality of recording devices 100. The plurality of recording devices 100 are in a similar geolocation and may previously have been matched together as a group of recording devices 100 by the server 120.

At 704, the server 120 optionally ranks the audio quality of the videos recorded by the plurality of recording devices 100. The server 120 may rank the audio quality based on one or more of: the audio volume, bass level, treble level, and audio hardware quality of the recording device 100.

At 706, the server 120 receives a request for video data corresponding to a video recorded by one of the plurality of recording devices 100. The request may be from one of the plurality of recording devices 100. Alternatively, the request may be from a remote device 140, either in real-time as the video is being recorded, or after the event has finished. In either case, the request may be sent in response to an input from a user of the device 100, 140, such as a touch gesture. In the case of a remote device 140 receiving an initial video upon starting up the application running on the remote device 140, the request may take the form of parameters that determine the initial video, and that are set by user-configurable settings within the application.

At 708, the server 120 sends the video data corresponding to the video recorded by the one of the plurality of recording devices 100. If the video data is specified in the request (i.e. relates to video recorded by a specific recording device 100), then the server 120 sends that video data to the device 100, 140. If the video data corresponds to an initial video, then the server 120 firstly determines, based on the parameters sent at 706, the initial video from the videos recorded by the recording devices 100, and secondly sends the video data corresponding to the determined initial video.

At 710, the server 120 optionally sends the audio data corresponding to the video with the highest-ranked audio, if this was determined at 704.

At 712, in the case of videos being viewed in real-time (i.e. live), the server 120 optionally determines that the one of the plurality of recording devices 100 (whose video is currently being viewed on the device 100, 140) is no longer recording video of the scene. This determination may be made by the server 120, based on monitoring location information and/or orientation information received from the one of the plurality of recording devices 100. Alternatively or additionally, this determination may be made by the server 120 based on a notification sent to the server 120 by the recording device 100, informing the server 120 that the recording device 100 has stopped recording video of the scene 110 (based on movement detected by the recording device 100). Alternatively or additionally, this determination may be made by the server 120 if the recording device detects movement away from the scene 110 and, in response, stops sending video data to the server 120.

At 714, the server 120 sends video data corresponding to video recorded by a different one of the plurality of recording devices 100 to the device 100, 140. For example, the server 120 may send video data corresponding to video recorded by the next-nearest recording device 100 to the recording device 100 that stopped recording video of the scene 110.

FIG. 8 is a flowchart of a method 800, implemented at a device, for initialising a group of devices that are recording video of a scene 110. The method 800 may, for example, be implemented at one or more processors of the recording device 100 shown in FIG. 1 (e.g. at the processor 1004 of the device 1000 shown in FIG. 10). In particular, the method 800 may be implemented in the form of an application comprising instructions stored on a transitory or non-transitory computer-readable medium (as described further below), wherein the instructions are executable by the one or more processors of the recording device 100 to cause the recording device 100 to implement the method 800.

At 802, a user opens an application installed on the recording device 100. The application may be an application that specifically implements the functionality described herein, or may be, for example, a browser application.

At 804, the application directs the recording device 100 to send location information (e.g. as determined by the GPS subsystem 1016 of the device 1000 in FIG. 10) to the server 120.

At 806, the application directs the recording device 100 to send orientation information (e.g. as determined by the magnetometer 1022 of the device 1100 in FIG. 10) to the server 120. The recording device 100 may also sent altitude information (e.g. as determined by the GPS subsystem 1022 and/or the pressure sensor(s) 1028 of the device 1000 in FIG. 10).

At 808, the recording device 100 receives a notification that it has been matched with a group of recording devices 100 that are each recording video of the scene 110.

At 810, the recording device 100 optionally receives, from the server 120, location information of the grouped recording devices 100 that it has been matched with, and the scene 110. The location information may, for example, be in the form of a virtual map identifying the relative locations of the grouped recording devices 100 and the scene 110. The application running on the recording device 100 may use the location information of the grouped recording devices 100 to display indicators to the user, indicating the locations of other recording devices 100 that are also recording video of the scene 110. Alternatively, if 810 is not carried out, the server 120 may determine the indicators to display using a determination made at the server 120 based on the relative locations of the grouped recording devices 100, and may send a command to the recording device 100 for specific indicators to be displayed.

At 812, the recording device 100 sends video data to the server 120. The recording device may then go on to carry out 506 and 508 of method 500, or to carry out 510 and 512 of method 500.

FIG. 9 is a flowchart of a method, implemented at a server, for initialising a group of devices that are recording video of a scene 110. The method 900 may, for example, be implemented at one or more processors of one or more servers (e.g. the server 120 shown in FIG. 1). In particular, the method 900 may be implemented in the form of instructions stored on a transitory or non-transitory computer-readable medium (as described further below), wherein the instructions are executable by the one or more processors of the server 120 to cause the server 120 to implement the method 900.

At 902, the server 120 receives location information from a recording device 100 that is recording video of a scene 110. At 904, the server 120 receives orientation information from the recording device 100 (and optionally, altitude information). At 906, the server 120 determines that the recording device 100 is recording video of the same scene 110 as at least one other recording device 100 in the same geolocation. This determination is made based on the location and orientation information received at 902 and 904. In particular, the server 120 determines whether the scene 110 is within the fields of view 102 of the recording device 100 and at least one other recording device 100. If so, the recording devices 100 are considered to be "matched" and to be a "group" of recording devices 100.

At 908, the server 120 sends a notification to the recording device 100 that it has been matched with other recording devices 100 in a similar geolocation.

At 910, the server 120 optionally also sends location information of all recording devices 100 in the group to each recording device 100 in the group. This location information may, for example, be in the form of a virtual map constructed at the server 120, that identifies the relative locations of the recording devices 100 and the scene 110.

At 912, the server 120 receives video data from the recording device 100. The video data corresponds to the video of the scene 110 that is being recorded by the recording device 100. This video data may then be sent by the server 120 to other recording devices 100 in the group. The server may go on to carry out 704 to 710 of method 700 and/or 712 and 714 of method 700.

FIG. 10 is a schematic diagram of a device 1000 that is configured to implement the methods described herein. The device 1000 may be configured to function as a recording device 100 that is configured to carry out the method 500 and/or the method 800, and/or as a remote device 140 that is configured to carry out the method 600.

The device 1000 includes a number of components that are in communication with one another via a bus 1002. The device 1000 includes one or more processors (shown in FIG. 10 as a processor 1002) and a memory 1004 (e.g. volatile and/or non-volatile memory). The memory 1004 is arranged to store instructions for executing methods 500, 600 and/or 800 (e.g. in the form of an application). The device 1000 further comprises a communications interface 1006 operable to permit communication between the device 1000 and a remote server 120 (e.g. via wireless, wired, or cellular communications).

The device 1000 includes a display 1008, which may be a touchscreen display that is arranged to receive user input. In the case of a remote device in the form of a laptop or PC without a touchscreen, the device 1000 may further comprise other components that receive user input (e.g. keyboard, touchpad). The display 1008 is operable to show an application window in which a video is displayed. The device 1000 preferably further comprises an audio output 1010, so that audio associated with the displayed videos can be heard by the user. For example, the audio output 1010 may be a speaker or a headphone jack.

In the case of a recording device, the device 1000 includes further components that allow videos to be recorded. In particular, the device 1000 includes a camera 1012 that is configured to capture video. Preferably, the device 1000 further includes a microphone 1014 that is configured to capture audio associated with the video being captured by the camera 1012.

In order for the location of the device 1000 to be determined (i.e. for a recording device), the device 1000 includes a GPS subsystem 1016. The GPS subsystem 1016 may also be configured to determine the altitude of the device 1000.

The device 1000 includes various sensing devices 1020 that allow a determination to be made as to whether the device 1000 is recording video of the same scene 110 as other devices. The sensing devices 1020 include a magnetometer 1022 that is arranged to provide the orientation of the device 1000. The sensing devices 1020 also include an accelerometer 1024 and/or a gyroscope 1026, that are arranged to detect movement of the device 1000. The sensing devices 1020 may also include one or more pressure sensors 1028, to allow the altitude of the device 1000 to be determined.

### Alternatives

Variations or modifications to the systems and methods described herein are set out in the following paragraphs.

The implementations described above can be used by professional broadcasters in the same way as by users of smartphone devices. In particular, the implementations described above can be extended to any technology with video recording capability and the capability to communicate with a remote server.

In examples in which videos are recorded by professional broadcasters (e.g. using cameras at an event) and sent to a server, users of remote devices can switch between the different cameras recording the scene. This can be implemented for live events, or for recorded (i.e. non-live) events. The broadcaster can select a sequence of different views (as currently available on normal broadcasts). The user of the remote device can choose to view the broadcaster-selected sequence or to manually choose their own views (e.g. using a touch gesture as described above). A subscription model is possible, in which a user pays a subscription to the broadcaster.

Similarly, the audio source can be dictated by the broadcaster to ensure continuity and quality. Alternatively, or additionally, the audio can be selected by the user to be from the camera that recorded the video displayed in the application running on their device (or from a different camera).

A mixed-source model is also possible, in which some cameras are broadcaster-controlled cameras, and some are event attendees' recording devices (e.g. mobile devices). In such an implementation, users' recording devices and remote devices both provide the ability to switch between different videos of the scene.

As explained above, the described methods may be implemented on a computing device (e.g. a device 100, 140 or one or more servers 120) using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

The singular terms "a" and "an" should not be taken to mean "one and only one". Rather, they should be taken to mean "at least one" or "one or more" unless stated otherwise. The word "comprising" and its derivatives including "comprises" and "comprise" include each of the stated features, but does not exclude the inclusion of one or more further features.

The above implementations have been described by way of example only, and the described implementations are to be considered in all respects only as illustrative and not restrictive. It will be appreciated that variations of the described implementations may be made without departing from the scope of the invention. It will also be apparent that there are many variations that have not been described, but that fall within the scope of the appended claims.

## Claims

1. A computer-implemented method, comprising:
receiving video data from each of a plurality of devices, wherein for each device of the plurality of devices, the received video data corresponds to a video of a scene recorded by the device from a distinct location;
receiving, from a first device of the plurality of devices, a request for video data corresponding to a video of the scene recorded by another one of the plurality of devices; and
sending the requested video data to the first device.

2. The method of claim 1, further comprising determining that the video data received from each of the plurality of devices corresponds to videos of the same scene.

3. The method of claim 1 or claim 2, further comprising receiving, from each of the plurality of devices, location information corresponding to the location of the device and orientation information corresponding to the orientation of the device.

4. The method of claim 3, further comprising sending, to at least one of the plurality of devices, location data corresponding to the locations of the plurality of devices.

5. The method of any of claims 1 to 4, further comprising:
sending, to a further device, an orientation indication that indicates a location of the scene relative to a location of the further device; and
in response to determining that the further device is recording video of the scene, grouping the further device with the plurality of devices.

6. The method of any of claims 1 to 5, further comprising:
detecting that one of the plurality of devices has stopped recording a video of the scene;
determining that another one of the plurality of devices was receiving video data corresponding to the video recorded by the device that has stopped recording; and
sending video data received from a different one of the plurality of devices to the other device.

7. The method of any of claims 1 to 6, further comprising:
determining the received video data corresponding to a video with the highest audio quality; and
sending, to the first device, audio data associated with the video with the highest audio quality.

8. A computer-implemented method implemented at a device in communication with one or more servers, the method comprising:
sending, to the one or more servers, first video data corresponding to a first video of a scene recorded by the device from a first location;
sending, to the one or more servers, a request for video data corresponding to a second video of the scene recorded from a second location that is different to the first location; and
receiving, from the one or more servers, the requested video data.

9. The method of claim 8, further comprising sending, to the one or more servers, location information corresponding to the location of the device and orientation information corresponding to the orientation of the device.

10. The method of claim 8 or claim 9, further comprising receiving, from the one or more servers, location data corresponding to the locations of a plurality of devices that are each recording video of the scene from a distinct location.

11. The method of any of claims 8 to 10, further comprising:
receiving, from the one or more servers, an orientation indication that indicates a location of the scene relative to a location of the device; and
in response to the device being orientated so that it is recording video of the scene, receiving, from the one or more servers, a notification informing the device that it is grouped with a plurality of devices that are each recording video of the scene from a distinct location.

12. The method of any of claims 8 to 11, further comprising:
determining that the device has stopped recording video of the scene; and
sending, to the one or more servers, an indication that the device has stopped recording video of the scene.

13. The method of any of claims 8 to 12, further comprising receiving, from the one or more servers, audio data corresponding to a third video recorded by one of a plurality of devices that are each recording video of the scene from a distinct location.

14. A computer-readable medium comprising computer-executable instructions that, when executed by one or more processors of a computing device, cause the computing device to carry out the method of any of claims 1 to 7.

15. A computer-readable medium comprising computer-executable instructions that, when executed by one or more processors of a computing device, cause the computing device to carry out the method of any of claims 8 to 14.
